(19) Europäisches Patentamt / European Patent Office / Office européen des brevets

(11) **EP 4 197 108 B1**

(12) **EUROPEAN PATENT SPECIFICATION**

(45) Date of publication and mention
of the grant of the patent:
**26.11.2025 Bulletin 2025/48**

(21) Application number: **21736565.9**

(22) Date of filing: **22.06.2021**

(51) International Patent Classification (IPC):
*H04B 7/0452* (2017.01)   *H04L 25/02* (2006.01)
*H04L 25/03* (2006.01)   *H04J 11/00* (2006.01)
*H04B 7/08* (2006.01)   *H04B 7/06* (2006.01)
*H04B 7/024* (2017.01)   *H04B 7/0404* (2017.01)

(52) Cooperative Patent Classification (CPC):
H04B 7/0452; H04B 7/024; H04B 7/0626;
H04B 7/0854; H04J 11/0026; H04J 11/005;
H04L 25/0204; H04L 25/0228; H04L 25/03949;
H04B 7/0404

(86) International application number:
**PCT/EP2021/066962**

(87) International publication number:
**WO 2022/268297 (29.12.2022 Gazette 2022/52)**

(54) **DEVICES AND METHODS FOR SOUNDING FOR COORDINATED BEAMFORMING**

VORRICHTUNGEN UND VERFAHREN ZUR SONDIERUNG FÜR KOORDINIERTE
STRAHLFORMUNG

DISPOSITIFS ET PROCÉDÉS PERMETTANT UN SONDAGE DESTINÉ À UNE FORMATION DE
FAISCEAU COORDONNÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.06.2023 Bulletin 2023/25**

(73) Proprietor: **Huawei Technologies Co., Ltd.
Shenzhen, Guangdong 518129 (CN)**

(72) Inventors:
• **LEVINBOOK, Yoav**
  **80992 Munich (DE)**
• **SHILO, Shimon**
  **80992 Munich (DE)**
• **KLEIN, Arik**
  **80992 Munich (DE)**
• **EZRI, Doron**
  **80992 Munich (DE)**

(74) Representative: **Gill Jennings & Every LLP
The Broadgate Tower
20 Primrose Street
London EC2A 2ES (GB)**

(56) References cited:
WO-A2-2009/157705     US-A1- 2010 034 146
US-A1- 2015 030 094

**Description**

TECHNICAL FIELD

The present disclosure relates to wireless communications. More specifically, the present disclosure relates to devices and methods for sounding for coordinated beamforming.

BACKGROUND

IEEE-802.11-based WLANs have become popular at an unprecedented rate. WLANs support a variety of data transfer modes including (but not only) file transfer, emails, web browsing and real-time applications such as audio and video applications. For efficiently supporting high throughputs, the evolving IEEE 802.11 standards specify several transmission (TX) schemes. Particularly useful for increasing the link throughput are TX schemes which deploy multiple TX antennas (some, but not all, also requiring multiple RX antennas on the receiver side), which are so called MIMO modes. Multiple TX antennas can be utilized in different advantageous ways, such as spatial TX diversity for improving the link reliability and performance, beamforming (BF), i.e. focusing the radiated power in the direction(s) of target receiver(s) and/or suppressing it in undesirable directions, for reducing unwanted interference to non-targeted receivers, and/or spatial multiplexing (SM), i.e. sending multiple data streams simultaneously over the same time-frequency resources, either to the same receiver or to different ones. Coordinated beamforming (C-BF) is a cooperation scheme where multiple access points (APs) cooperate such that when an AP transmits to its associated stations (STAs), i.e. to the STAs of its basic service set (BSS) it creates a null towards the STAs of an overlapping BSS (OBSS). In this way, the OBSS STAs are not interfered by the AP's transmission.

US2015030094A1 relates to interference avoidance for beamforming transmissions in wireless communication devices and systems. WO2009157705A2 relates to inter-cell interference avoidance for downlink transmission.

SUMMARY

It is an objective of the present disclosure to provide improved devices and methods for sounding for coordinated beamforming (C-BF).

The invention has been defined in the independent claims. Further specific technical features have been defined in the dependent claims.

BRIEF DESCRIPTION OF THE DRAWINGS

In the following, implementations of the present disclosure are described in more detail with reference to the attached figures and drawings, in which:

Fig. 1 shows a wireless communication network, including a first AP associated with a first non-AP station according to an implementation forming a first BSS and a second AP associated with a second non-AP station forming a second BSS;

Fig. 2 shows an exemplary wireless communication network, including a multi-antenna AP and three multi-antenna non-AP stations;

Fig. 3 shows an exemplary wireless communication network, including a multi-antenna AP and three multi-antenna non-AP stations;

Fig. 4 shows an exemplary wireless communication network, including two multi-antenna APs and four multi-antenna non-AP stations;

Fig. 5 shows the PER as a function of the SNR for the exemplary scenarios shown in figures 2 to 4;

Fig. 6 shows a wireless communication network, including a first and a second multi-antenna AP and a plurality of multi-antenna non-AP stations, including a multi-antenna non-AP station according to an implementation;

Fig. 7 shows the PER as a function of the SNR for different configurations of the wireless communication network shown in figure 6;

Fig. 8 shows a sequence diagram illustrating a sounding procedure implemented by the wireless communication network of figure 6;

Fig. 9 shows a sequence diagram illustrating a further sounding procedure implemented by the wireless communication network of figure 6;

Fig. 10 shows a sequence diagram illustrating a further sounding procedure implemented by the wireless communication network of figure 6; and

Fig. 11 is a flow diagram illustrating a method of operating a multi-antenna wireless non-AP station according to an implementation.

In the following, identical reference signs refer to identical or at least functionally equivalent features.

## DETAILED DESCRIPTION OF THE IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those that comprise at least all the features of an independent claim. Any implementation that does not fall within the scope of the claims does not form part of the invention, but rather included as an illustrative example that is useful for understanding the invention.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

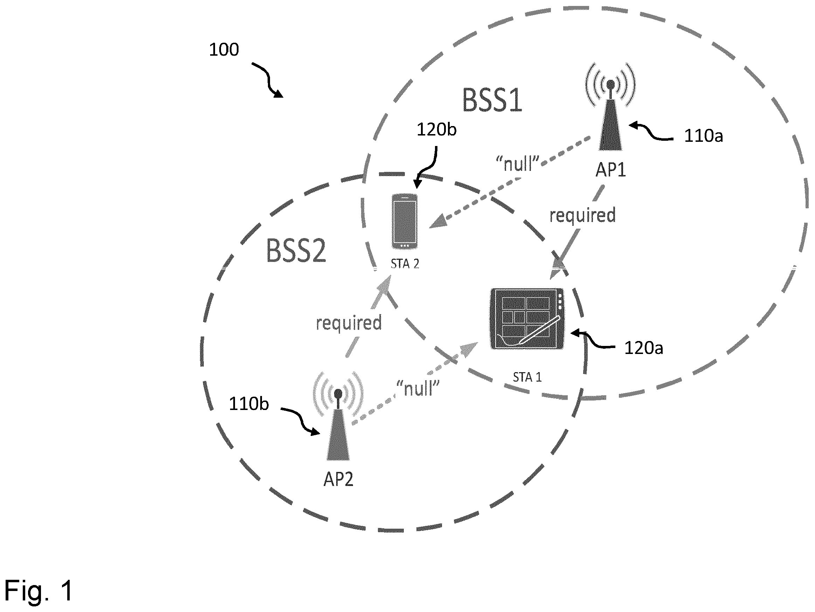

Figure 1 shows an exemplary wireless communication network 100 configured for coordinated beamforming (C-BF). The wireless communication network 100 comprises a first multi-antenna AP 110a (referred to as "AP1" in figure 1) communicating within its BSS1 with the multi-antenna non-AP station 120a, i.e. its associated station 120a (referred to as "STA 1" in figure 1) and a second multi-antenna AP 110b (referred to as "AP2" in figure 1) communicating within its BSS2 with the associated station 120b (referred to as "STA 2" in figure 1). As will be appreciated, for the first multi-antenna AP 110a and its associated station 120a the BSS2 constitutes an OBSS (and vice versa). In an implementation, the wireless communication network 100 and the elements thereof may be configured to comply with one or more of the standards of the IEEE 802.11 family of standards.

As illustrated in figure 1, when the first multi-antenna AP 110a transmits to its associated station 120a, it creates a null towards the OBSS station 120b, and, when the second multi-antenna AP 110b transmits to its associated station 120b, it creates a null towards the OBSS station 120a. This allows both APs 110a, 110b to transmit to their respective stations 120a, 120b simultaneously without degrading the SNR or SINR at the receiver of each station 120a, 120b. In order to support C-BF, each AP 110a, 110b needs to precode its data such that the SNR for its associated STA is sufficiently high while creating a null towards OBSS STAs (such that the OBSS STAs cannot "hear" the AP's transmission). This means each AP needs to know either the channels or the precoders for their associated STAs as well as the OBSS STAs which require nulling. This information may be obtained by means of a sounding procedure.

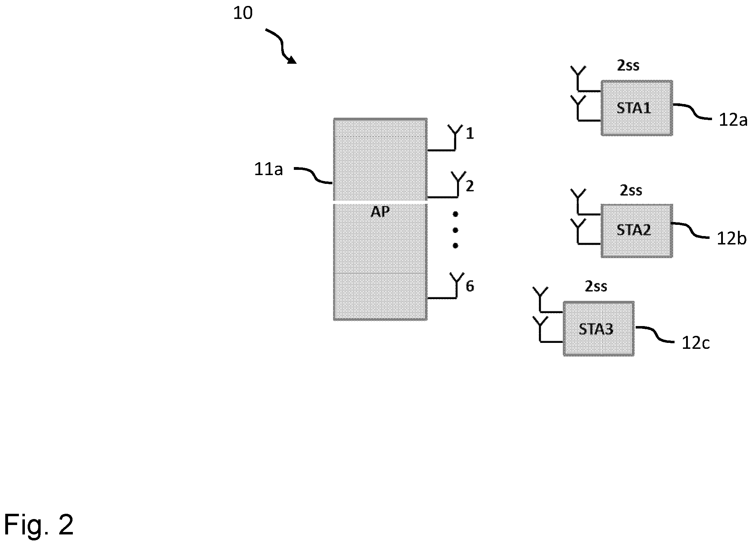

Before describing several implementations of the multi-antenna non-AP station 120a in more detail, in the following some technical background as well as terminology concerning wireless networks and devices in accordance with the IEEE 802.11 WLAN standard will be introduced under reference to figures 2 to 5. In the following one or more of the following acronyms may be used:

| | |
|---|---|
| ACK | Acknowledgment |
| AP | Access Point |
| BA | block-ACK - in 802.11, typically a receiver is expected to respond to a data transmission by responding with an ACK; if multiple frames are transmitted within a single PPDU, each has to be acknowledged |

BFR            Beamforming Feedback Report
BFRP           Beamforming Feedback Report Poll
BSS            Basic Service Set
DoF            Degrees of Freedom
DL             Downlink
MAC           Medium Access Control
MIMO          Multiple Input Multiple Output
MPDU         MAC Protocol Data Unit
MUI            Multi-User Interference
MU-MIMO     Multi-User MIMO
NDP           Null Data Packet
NDPA         Null Data Packet Announcement
OBSS          Overlapping Basic Service Set
OFDMA       Orthogonal Frequency Division Multiple Access
PHY           Physical Layer
PPDU         PHY Protocol Data Unit
Rx             Receive
SINR          Signal to Interference and Noise Ratio
SNR           Signal to Noise Ratio
STA           Station (in general, can be either an AP STA or a non-AP STA)
SVD           Singular Value Decomposition
TF             Trigger Frame - in 802.11ax, the Trigger Frame was introduced as a means to trigger a STA or multiple STAs to transmit simultaneously and in sync to the triggering AP
Tx             Transmit
UL             Uplink

Figure 2 shows an exemplary wireless communication network 10 comprising a single multi-antenna AP 11a and a plurality of multi-antenna STAs 12a-c. When the single AP 11a wants to transmit to the multiple STAs 12a-c in an MU-MIMO mode, it needs to transmit its data to each STA 12a-c such that this transmission does not interfere with the transmission intended for the other STAs. In other words, the AP 11a attempts to keep the multi-user interference (MUI) to a minimum (optimally zero). Therefore, the precoder used by the multi-antenna AP 11a for a respective STA 12a-c needs to lie in the null space of the channels of all the other STAs. In the example shown in figure 2, the AP 11a has six Tx antennas transmitting to the three STAs 12a-c each with 2 Rx antennas (and, thus, 2 spatial streams per STA 12a-c).

The precoder used by the AP 11a for the first STA 12a takes the form $\mathbf{P}_1 = \mathbf{N}_{2,3} \cdot \mathbf{A}_1$, wherein

$$\mathbf{N}_{2,3} = \mathrm{null}\left(\begin{bmatrix} \mathbf{H}_2 \\ \mathbf{H}_3 \end{bmatrix}\right) = \mathrm{null}\left(\begin{bmatrix} \mathbf{V}_2^* \\ \mathbf{V}_3^* \end{bmatrix}\right)$$

and $\mathbf{H}_2$, $\mathbf{H}_3$ denotes the respective channel matrix between the AP 11a and the second STA 12b and between the AP 11a and the third STA 12c ( $\mathbf{V}_2^*$ and $\mathbf{V}_3^*$ denote a respective component of the SVD of the channel matrix $\mathbf{H}_2$ and $\mathbf{H}_3$, respectively). By choosing the precoder in this way, $\mathbf{P}_1$ lies in the null space of the channels of the second and third STA 12b, 12c (and precoders). $\mathbf{A}_1$ is an additional precoding term which can, for example, be computed based on the singular vectors of $\mathbf{H}_1 \cdot \mathbf{N}_{2,3}$. The precoder $P_1$ can be determined by the AP 11a using, for example, the Pseudo-Inverse.

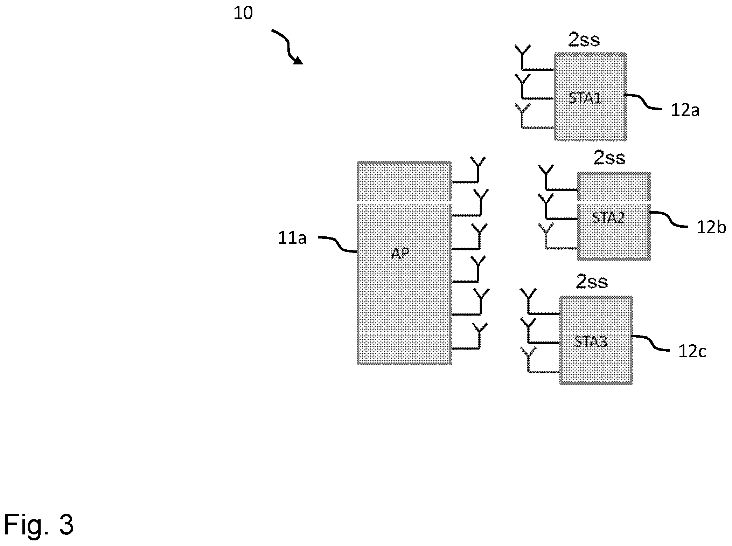

Figure 3 shows a variant of the MU-MIMO example of figure 2, where there are more Rx antennas than streams (per STA). Thus, in the example shown in figure 2, each STA 12a-c has three Rx antennas. Also, for this example the AP 11a may compute the precoder as $\mathbf{P}_1 = \mathbf{N}_{2,3} \cdot \mathbf{A}_1$, wherein

$$\mathbf{N}_{2,3} = \mathrm{null}\left(\begin{bmatrix} \mathbf{H}_2 \\ \mathbf{H}_3 \end{bmatrix}\right).$$

However, since for this example the channel matrices $\mathbf{H}_2$ and $\mathbf{H}_3$ are each of size $3 \times 6$ the AP 11a would need at least eight Tx antennas (to transmit 2 streams, otherwise no degrees-of-freedom).

An alternative approach would be to separate the 'used' components (in the example of figure 2, the first two components) from the 'unused' components (in the example of figure 2, the third component) of a SVD of the first channel matrix in the following way:

$$\mathbf{H}_1 = \mathbf{U}_1 \cdot \mathbf{D}_1 \cdot \mathbf{V}_1^* = \overline{\mathbf{U}}_1 \cdot \overline{\mathbf{D}}_1 \cdot \overline{\mathbf{V}}_1^* + \widetilde{\mathbf{U}}_1 \cdot \widetilde{\mathbf{D}}_1 \cdot \widetilde{\mathbf{V}}_1^*.$$

In this case the AP 11a may determine the precoder as $\mathbf{P}_1 = \mathbf{N}_{2,3} \cdot \mathbf{A}_1$, wherein

$$\mathbf{N}_{2,3} = \mathrm{null}\left(\begin{bmatrix} \overline{\mathbf{V}}_2^* \\ \overline{\mathbf{V}}_3^* \end{bmatrix}\right).$$

Since for the example of figure 2 $\overline{V}_i^*$ are each of size $2 \times 6$, the AP 11a requires at least six Tx antennas, which is the case in the example shown in figure 2.

For estimating the MUI for the example of figure 2 the received signal at the first STA 12a can be determined in the following way:

$$\mathbf{y}_1 = \mathbf{H}_1\left(\mathbf{P}_1\mathbf{s}_1 + \mathbf{P}_2\mathbf{s}_2 + \mathbf{P}_3\mathbf{s}_3\right) + \rho\mathbf{n}_1$$

$$= \mathbf{H}_1\mathbf{P}_1\mathbf{s}_1 + \underbrace{\left(\overline{\mathbf{U}}_1\overline{\mathbf{D}}_1\overline{\mathbf{V}}_1^* + \widetilde{\mathbf{u}}_1\widetilde{d}_1\widetilde{\mathbf{v}}_1^*\right)}_{\mathbf{H}_1}\left(\mathbf{P}_2\mathbf{s}_2 + \mathbf{P}_3\mathbf{s}_3\right) + \rho\mathbf{n}_1$$

$$= \mathbf{H}_1\mathbf{P}_1\mathbf{s}_1 + \widetilde{\mathbf{u}}_1\left\{\widetilde{d}_1\widetilde{\mathbf{v}}_1^*\left(\mathbf{P}_2\mathbf{s}_2 + \mathbf{P}_3\mathbf{s}_3\right)\right\} + \rho\mathbf{n}_1$$

Thus, as will be appreciated, the MUI from all STAs 12a-c is modulating $\widetilde{\mathbf{u}}_1$. Consequently, at high SNR, degrees of freedom (DoF) of the receiver have to be "sacrificed" with the rank of the MUI covariance matrix (e.g. through MVDR). In other words, for the example of figure 2 it is necessary to give up a single DoF in order to fully mitigate the MUI from all STAs 12a-c.

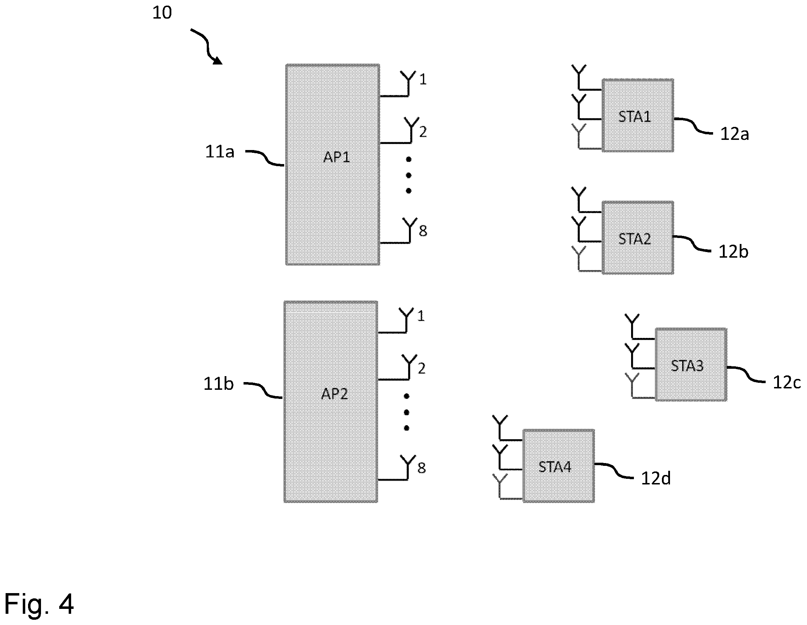

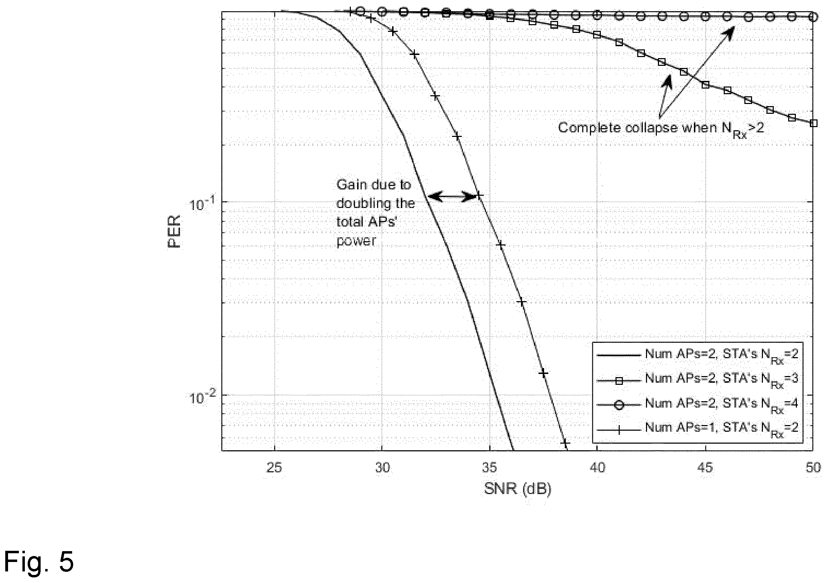

Figure 4 shows a further variant of the examples shown in figures 2 and 3. In the example shown in figure 4 the wireless network 10 comprises two APs 11a, 11b having eight Tx antennas and four STAs 12a-d having three Rx antennas each. As already described above, in coordinated beamforming (C-BF) each AP 11a, 11b transmits (in MU-MIMO style) to its STAs, while placing a null on the OBSS STAs. Applying the known approach described above in the context of the example of figure 3 (for MU-MIMO with more Rx antennas than streams) completely fails, when there are more Rx antennas than streams. For example, if there are two cooperating APs 11a, 11b, the MUI is modulated over 2 vectors, so MVDR (with a single DoF) will fail. The corresponding "collapse" of the performance can be taken from the graphs shown in figure 5.

Thus, as will be appreciated from figure 5, using the existing feedback, C-BF will fail when the number of Rx antennas at the STA side is larger than the number of streams allocated to it. As will be described in more detail in the following, implementations disclosed herein may address this issue based on the idea for each STA to compute the precoder it feedbacks to an OBSS AP based on the precoder it feedbacks to its own BSS AP (such that the precoders used by the OBSS AP are within the null space of the precoders used by the BSS AP).

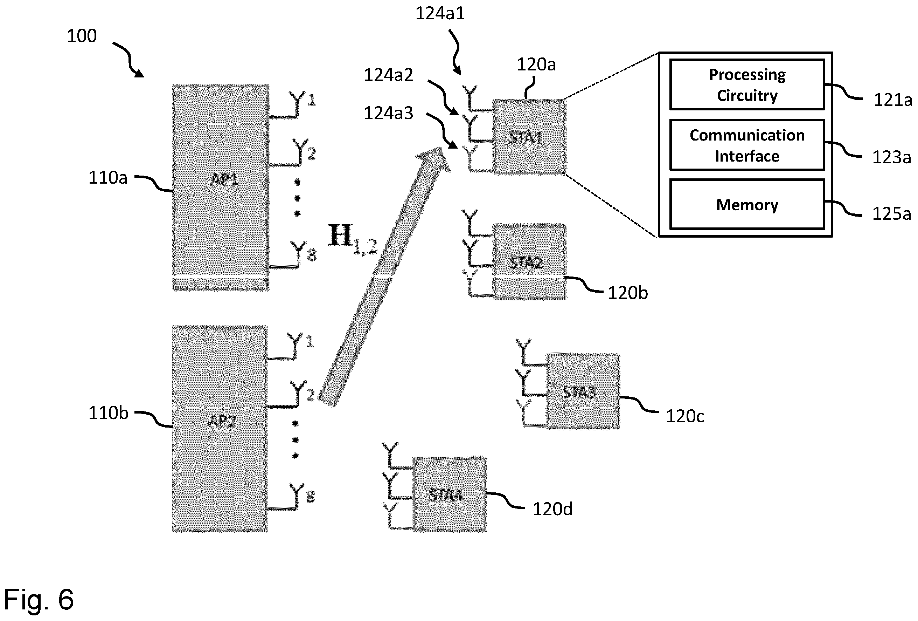

An implementation of the multi-antenna non-AP station 120a will be described in more detail in the following under reference to figure 6. The multi-antenna non-AP station 120a is configured to communicate with the multi-antenna AP 110a within its BSS. As illustrated in figure 6, the multi-antenna non-AP station 120a comprises a communication interface 123a with a plurality of antennas 124a1-3 configured to receive one or more first pilot signals from the first BSS multi-antenna AP 110a and one or more second pilot signals from the second OBSS multi-antenna AP 110b.

Moreover, the multi-antenna non-AP station 120a comprises a processing circuitry 121a configured to estimate a first channel matrix $\mathbf{H}_{1,1}$ representing the channel between the multi-antenna non-AP station 120a and the first multi-antenna AP 110a based on the one or more first pilot signals and a second channel matrix $\mathbf{H}_{1,2}$ representing the channel between the multi-antenna non-AP station 120a and the second multi-antenna AP 110b based on the one or more second pilot signals. The processing circuitry 121a is further configured to determine, based on the first channel matrix $\mathbf{H}_{1,1}$, an interference rejection combiner matrix $\mathbf{W}_1$ for suppressing a multi-user interference caused by the first BSS multi-antenna AP 110a at the multi-antenna non-AP station 120a. In addition, as will be described in more detail below, the processing circuitry 121a is configured to determine, based on the second channel matrix $\mathbf{H}_{1,2}$ and the interference rejection combiner $\mathbf{W}_1$ feedback information for the second OBSS multi-antenna AP 110b which will be used to suppress multi-user interference caused by the second BSS multi-antenna AP 110b.

The communication interface 123a of the multi-antenna non-AP station 120a is further configured to send first feedback information based on the first channel matrix $\mathbf{H}_{1,1}$ to the first BSS multi-antenna AP 110a and second feedback information based on the interference rejection combiner matrix $\mathbf{W}_1$ and the second channel matrix $\mathbf{H}_{1,2}$ to the second OBSS multi-antenna AP 110b. Based on the second feedback information the second OBSS multi-antenna AP 110b may use an improved beamformer causing less (optimally zero) multi-user interference at the multi-antenna non-AP station 120a.

In the example shown in figure 6, the first multi-antenna AP 110a and the second multi-antenna AP 110b are transmitting to a total of four STAs 120a-d, including the multi-antenna non-AP station 120a according to an implementation. As illustrated in figure 6, $\mathbf{H}_{k,m}$ denotes the matrix representing the channel between the k-th STA 120a-d and the m-th AP 110a, 110b.

In an implementation, the processing circuitry 121a of the multi-antenna non-AP station 120a may be configured to determine the first feedback information for the first BSS multi-antenna AP 110a in a conventional manner, such as by decomposing the first channel matrix $\mathbf{H}_{1,1} = \mathbf{U}_{1,1} \cdot \mathbf{D}_{1,1} \cdot \mathbf{V}_{1,1}^*$. Then, the communication interface 123a may provide the first feedback information based on $\mathbf{D}_{1,1}$ and $\mathbf{V}_{1,1}^*$ to the first AP (this can be fed-back immediately after the receipt of the one or more first pilot signals or after both the one or more first pilot signals and the one or more second pilot signals have been received by the multi-antenna non-AP station 120a).

As already described above, in order to mitigate the MUI of the multi-antenna AP 110a the multi-antenna non-AP station 120a uses an interference rejection combiner $\mathbf{W}_1$. In an implementation, the interference rejection combiner $\mathbf{W}_1$ is configured to project onto the null-space basis of $\tilde{\mathbf{u}}_1$ which is $\overline{\mathbf{U}}_1$. The interference from the second OBSS multi-antenna AP 110b to the multi-antenna non-AP station 120a can be expressed as:

$$\mathbf{W}_1 \cdot \mathbf{H}_{1,2} \cdot (\mathbf{P}_3 \mathbf{s}_3 + \mathbf{P}_4 \mathbf{s}_4),$$

wherein $\mathbf{P}_3$ and $\mathbf{P}_4$ denote the precoding matrices used by the second OBSS multi-antenna AP 110b for the 3rd and 4th STAs 120c-d, respectively, and $\mathbf{s}_i$ denotes the signal for the i-th STA 120a-d. In an implementation, this becomes:

$$\overline{\mathbf{U}}_1^* \cdot \mathbf{H}_{1,2} \cdot (\mathbf{P}_3 \mathbf{s}_3 + \mathbf{P}_4 \mathbf{s}_4).$$

Therefore, if $\mathbf{P}_3$ and $\mathbf{P}_4$ are in the null space of the composite matrix $\mathbf{W}_1 \cdot \mathbf{H}_{1,2}$, in particular $\overline{\mathbf{U}}_1^* \cdot \mathbf{H}_{1,2}$ then there is zero MUI at the multi-antenna non-AP station 120a.

As already described above, the processing circuitry 121a of the multi-antenna non-AP station 120a may compute the first feedback information for the first BSS multi-antenna AP 110a in a conventional manner based on the one or more first pilot signals. Thus, in an implementation, the multi-antenna non-AP station 120a may determine a SVD of the first channel matrix, i.e. $\mathbf{H}_{1,1} = \mathbf{U}_{1,1} \cdot \mathbf{D}_{1,1} \cdot \mathbf{V}_{1,1}^*$ and prepare the first feedback information on the basis of $\mathbf{D}_{1,1}$ and $\mathbf{V}_{1,1}^*$. In an implementation, the first feedback information may comprise $\mathbf{D}_{1,1}$ and $\mathbf{V}_{1,1}$ or at least portions thereof. For instance, in an implementation, the first feedback information may comprise K columns of the matrix $\mathbf{V}_{1,1}$. This feedback information can be sent immediately in response to the one or more first pilot signals or at a later stage (e.g. in response to receiving the one or more second pilot signals as well).

In an implementation, the processing circuitry 121a of the multi-antenna non-AP station 120a may be configured to determine the second feedback information based on the interference rejection combiner matrix $\mathbf{W}_1$ and the second channel matrix $\mathbf{H}_{1,2}$ in the following way.

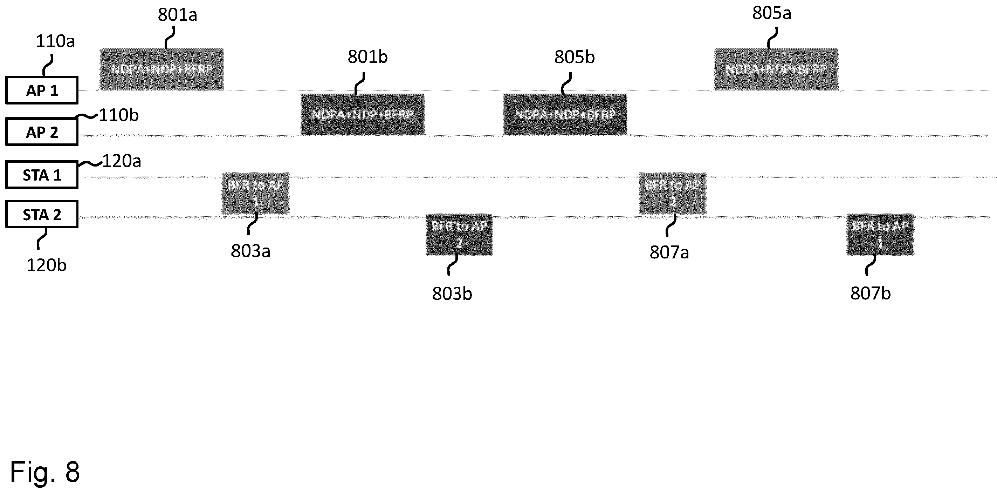

In an initial stage, which will be described in more detail in the context of figures 8 to 10 below, the communication interface 123a of the multi-antenna non-AP station 120a receives a NDP frame comprising the one or more second pilot signals from the second OBSS AP 110b. In a further stage, as already described above, the processing circuitry 121a of the multi-antenna non-AP station 120a is configured to compute based on the one or more first pilot signals the first channel matrix $\mathbf{H}_{1,1}$ and the interference rejection combiner matrix $\mathbf{W}_1$ and to estimate based on the one or more second pilot signals the second channel matrix $\mathbf{H}_{1,2}$.

In an implementation, the processing circuitry 121a of the multi-antenna non-AP station 120a is configured to generate the second feedback information based on a basis (i.e. a set of basis vectors), in particular an orthonormal basis of the matrix product of the interference rejection combiner matrix $\mathbf{W}_1$ and the second channel matrix $\mathbf{H}_{1,2}$, i.e. a basis of $\mathbf{W}_1 \cdot \mathbf{H}_{1,2}$ (which is herein denoted as $\mathbf{B} = \mathbf{W}_1 \cdot \mathbf{H}_{1,2}$). For instance, the processing circuitry 121a of the multi-antenna non-AP station 120a may be configured to generate the orthonormal basis of $\mathbf{B} = \mathbf{W}_1 \cdot \mathbf{H}_{1,2}$ based on a QR decomposition of $\mathbf{B}^*$ (i.e. the complex conjugate of the matrix $\mathbf{B} = \mathbf{W}_1 \cdot \mathbf{H}_{1,2}$) in the form $\mathbf{Q} \cdot \mathbf{R}$, a Gram-Schmidt factorization, a Cholesky factorization or a singular value decomposition (SVD). In an implementation, the processing circuitry 121a of the multi-antenna non-AP station 120a is configured to generate the second feedback information based on one or more orthonormal vectors of the basis of the row space of the matrix $\mathbf{B} = \mathbf{W}_1 \cdot \mathbf{H}_{1,2}$.

Thus, in an implementation, the processing circuitry 121a of the multi-antenna non-AP station 120a is configured to compute the QR decomposition in the form $\mathbf{B}^* = \mathbf{Q} \cdot \mathbf{R}$, in particular $\left(\overline{\mathbf{U}}_1^* \cdot \mathbf{H}_{1,2}\right)^* = \mathbf{Q} \cdot \mathbf{R}$ and to feedback $K$ column vectors of the orthogonal matrix $\mathbf{Q}$ of the QR decomposition back to the OBSS AP 110b. Herein the $K$ column vectors of the orthogonal matrix $\mathbf{Q}$ of the QR decomposition are denoted as $\mathbf{V}_{1,2}^{eq}$. Based on the second feedback information provided by the multi-antenna non-AP station 120a, the second OBSS multi-antenna AP 110b computes the precoders to use as usual, such that $\mathbf{P}_3$ and $\mathbf{P}_4$ are in the null space of $\mathbf{V}_{1,2}^{eq}$. The precoders (e.g. $\mathbf{P}_3$ and $\mathbf{P}_4$) may be computed using, for example, the pseudo-inverse.

In the example shown in figure 6, the communication interface 123a of the multi-antenna non-AP station 120a comprises, by way of example, three antennas 124a1-3. Thus, in principle, the multi-antenna non-AP station 120a may communicate with the multi-antenna BSS non-AP station 120a using up to three spatial streams (SS). In the exemplary implementation shown in figure 6, the communication interface 123a is configured to communicate with the first BSS multi-antenna AP 120 using, by way of example, only two spatial communication streams. In such a scenario, for determining the interference rejection combiner matrix $\mathbf{W}_1$ the processing circuitry 121a of the multi-antenna non-AP station 120a is configured to decompose a singular value decomposition $\mathbf{H}_{1,1} = \mathbf{U}_{1,1} \cdot \mathbf{D}_{1,1} \cdot \mathbf{V}_{1,1}^*$ of the first channel matrix $\mathbf{H}_{1,1}$ into a first component due the used spatial communication streams and a second component $\widetilde{\mathbf{U}}_{1,1} \cdot \widetilde{\mathbf{D}}_{1,1} \cdot \widetilde{\mathbf{V}}_{1,1}^*$ due to the unused spatial communication streams, i.e. $\mathbf{H}_{1,1} = \overline{\mathbf{U}}_{1,1} \cdot \overline{\mathbf{D}}_{1,1} \cdot \overline{\mathbf{V}}_{1,1}^* + \widetilde{\mathbf{U}}_{1,1} \cdot \widetilde{\mathbf{D}}_{1,1} \cdot \widetilde{\mathbf{V}}_{1,1}^*$, and to determine the interference rejection combiner matrix $\mathbf{W}_1$ as the matrix $\overline{\mathbf{U}}_{1,1}^*$, wherein $\overline{\mathbf{U}}_{1,1}^*$ denotes the complex conjugate of the matrix $\overline{\mathbf{U}}_{1,1}$.

As illustrated in figure 6, the multi-antenna non-AP station 120a may further comprise a memory 125a configured to store the interference rejection combiner matrix $\mathbf{W}_1$. Storing the interference rejection combiner matrix $\mathbf{W}_1$ in the memory 125a of the multi-antenna non-AP station 120a allows re-using the interference rejection combiner matrix $\mathbf{W}_1$ for efficiently generating the feedback information for a further OBSS multi-antenna AP.

In an implementation, the processing circuitry 121a of the multi-antenna non-AP station 120a may be further configured to determine a signal strength of the one or more second pilot signals from the second OBSS multi-antenna AP 110b, wherein the communication interface 123a is further configured to send the second feedback information to the second OBSS multi-antenna AP 110b depending on the signal strength of the one or more second pilot signals. For instance, the communication interface 123a may be configured to send the second feedback information to the second OBSS multi-antenna AP 110b, only if the signal strength of the one or more second pilot signals is larger than a minimum signal threshold value.

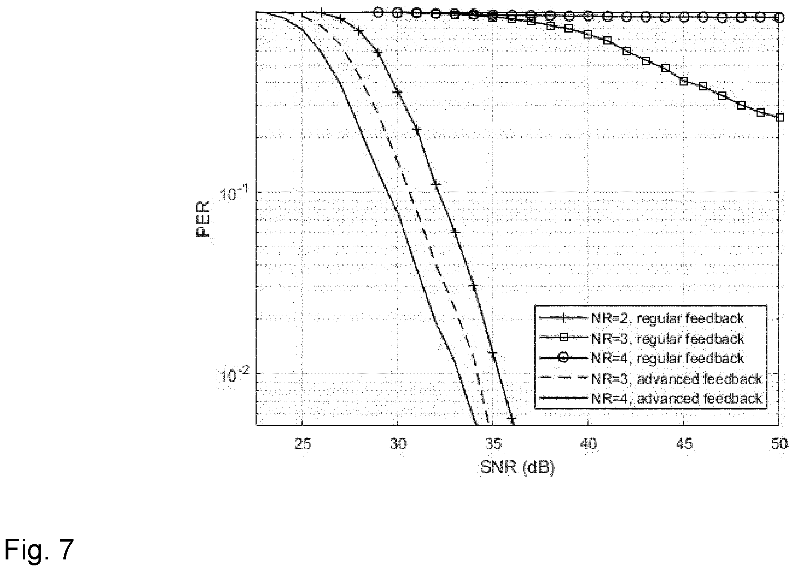

Figure 7 shows the improved MUI mitigation performance due to the second feedback information provided by the multi-antenna non-AP station 120a according to an implementation. More specifically, figure 7 shows the PER as a function of the SNR for different configurations of the wireless communication network 100 shown in figure 6. For the results shown in figure 7 the following configuration of the wireless communication network 100 of figure 6 has been used: two collaborating APs 110a, 110b, each with eight Tx antennas; four STAs 120a-d, two spatial streams per STA, MCS 7 (64QAM rate 5/6), 40 MHz bandwidth. As can be taken from figure 7, the multi-antenna non-AP station 120a manages to not only operate when the number of Rx antennas is larger than the number of spatial streams, but improves the performance compared with the baseline scenario (number of Rx antennas identical to number of streams) since it yields zero MUI. Using the conventional feedback leads to a poor performance (including a high error floor).

Figure 8 shows a sequence diagram illustrating a sequential sounding procedure for C-BF implemented by the wireless communication network 100 of figure 6, including the multi-antenna non-AP station 120a according to an implementation. As illustrated in figure 8, each AP 110a, 110b transmits a sounding sequence 801a,b, 805a,b comprising a NDPA, NDP and BFRP (more specifically a BFRP trigger frame), wherein the respective NDP comprises the one or more first pilot signals or the one or more second pilot signals. In response thereto, the respective STA 120a, 120b provides by means of a beamforming report 803a,b, 807a,b the first feedback information and the second feedback information. As will be appreciated, in figure 8 (where for the sake of clarity the details of TXOP sharing have been ignored) the order of the transmitting APs 110a, 110b is chosen such that it allows the STA(s) 120a, 120b to compute and apply the respective interference rejection matrix. In the exemplary sequential sounding procedure shown in figure 8 each transmission of an NDPA/NDP is followed by a BFR 803a,b, 807a,b from the STA(s) 120a, 120b. In a further implementation, the STA(s) 120a, 120b may be configured to provide the feedback to all APs 110a, 110b substantially simultaneously, and not as a response to each separate NDPA/NDP (as illustrated in figure 8). Thus, in an implementation, the processing circuitry 121a of the multi-antenna non-AP station 120a is configured to determine the first feedback information based on the first channel matrix $\mathbf{H}_{1,1}$, in response to receiving the one or more first pilot signals, and to determine the second feedback information based on the interference rejection combiner matrix $\mathbf{W}_1$ and the second channel matrix $\mathbf{H}_{1,2}$ in response to receiving the one or more first pilot signals and the one or more second pilot signals.

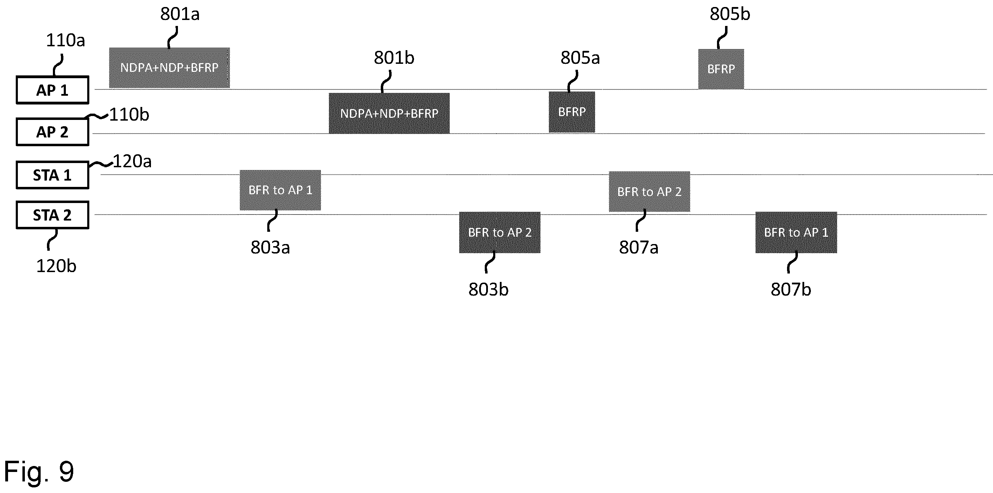

Figure 9 shows a sequence diagram illustrating a variant of the sounding procedure illustrated in figure 8. According to the variant shown in figure 9, the NDPA and NDP may be skipped, when an AP 110a, 110b is sounding an OBSS STA 120a, 120b. More specifically, the transmissions 805a,b shown in figure 9 include a BFRP, but no NDPA or NDP. Thus, in an implementation, the communication interface 123a is configured to send the first feedback information to the first multi-antenna AP 110a, in response to receiving a first null data packet, NDP, including the one or more first pilot signals, and a first beamforming report poll, BFRP, from the first multi-antenna AP 110a, and to send the second feedback information to the second multi-antenna AP 110b, in response to receiving a second BFRP from the second multi-antenna AP 110b, wherein the second feedback information is based on the one or more first pilot signals of the first NDP and the one or more second pilot signals of a second NDP, wherein the second NDP was transmitted at an earlier stage by the second multi-antenna AP 110b to the further multi-antenna non-AP station 120b and also received by the multi-antenna non-AP station 120a.

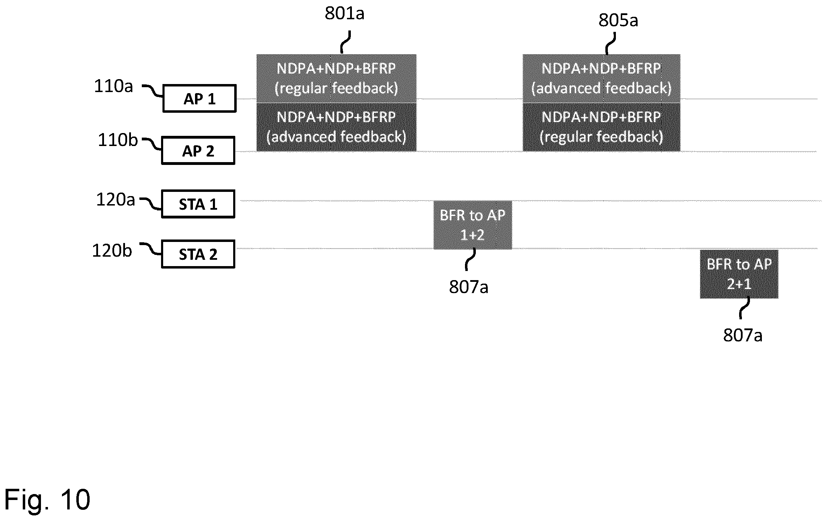

Figure 10 shows a sequence diagram illustrating a further variant of the sounding procedure illustrated in figure 8, namely a joint sounding protocol for C-BF. According to the joint sounding protocol illustrated in figure 10, all APs 110a, 110b transmit the sounding sequence 801a, 805a together, i.e. substantially simultaneously. As illustrated in figure 10, the NDPA sequence transmitted to an intended receiver (i.e. the STA 120a or the STA 120b) may request the first feedback information (referred to as "regular feedback" in figure 10), while the NDPA sequence transmitted to a non-intended receiver (i.e. the STA 120a or the STA 120b) may request the second feedback information (referred to as "advanced feedback" in figure 10).

In an implementation, the NDPA received by the multi-antenna non-AP station 120a according to an implementation may comprise an indication instructing the multi-antenna non-AP station 120a to store the interference rejection matrix (based on the feedback computed for the first beamformer).

In an implementation, the NDPA received by the multi-antenna non-AP station 120a according to an implementation may further comprise an indication for the non-intended receiver, i.e. station to compute the second feedback information based on the interference rejection matrix. This indication may also be supported by a capability indication so that a STA (or an AP) that supports this capability can be directed to feedback the first feedback information (i.e. the "regular feedback") or the second feedback information (i.e. the "advanced feedback").

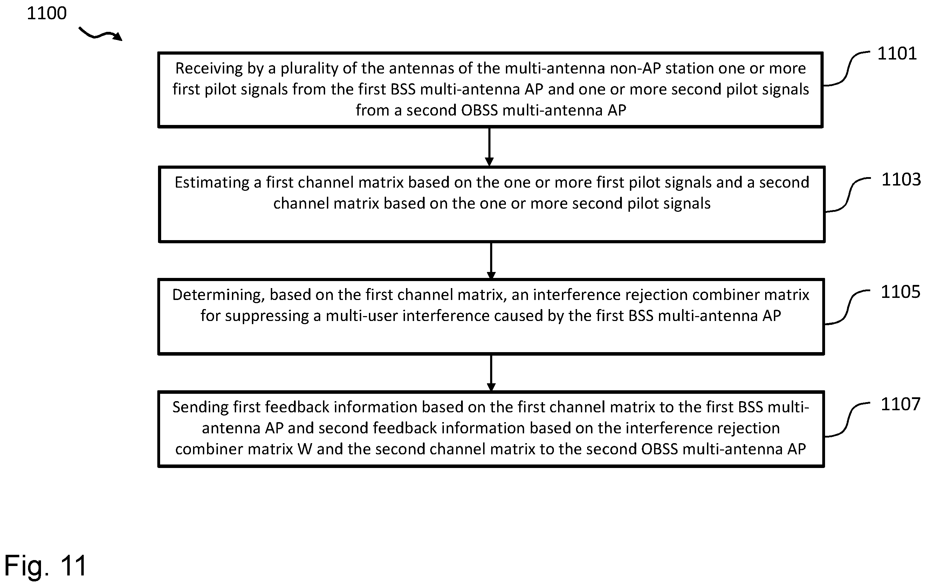

Figure 11 is a flow diagram illustrating a method 1100 of operating the multi-antenna wireless non-AP station 120a according to an implementation.

The method 1100 comprises a step 1101 of receiving by the plurality of antennas 124a1-3 of the multi-antenna non-AP station 120a one or more first pilot signals from the first BSS multi-antenna AP 110a and one or more second pilot signals from the second OBSS multi-antenna AP 110b. Moreover, the method 1100 comprises a step 1103 of estimating a first channel matrix $\mathbf{H}_{1,1}$ representing the channel between the multi-antenna non-AP station 120a and the first BSS multi-antenna AP 110a based on the one or more first pilot signals and a second channel matrix $\mathbf{H}_{1,2}$ representing the channel between the multi-antenna non-AP station 120a and the second OBSS multi-antenna AP 110b based on the one or more second pilot signals.

Moreover, the method 1100 comprises a step 1105 of determining, based on the first channel matrix $\mathbf{H}_{1,1}$, an interference rejection combiner matrix $\mathbf{W}_1$ for suppressing a multi-user interference caused by the first BSS multi-antenna AP 110a. The method 1100 further comprises a step 1107 of sending first feedback information based on the first channel matrix $\mathbf{H}_{1,1}$ to the first BSS multi-antenna AP 110a and second feedback information based on the interference rejection combiner matrix $\mathbf{W}_1$ and the second channel matrix $\mathbf{H}_{1,2}$ to the second OBSS multi-antenna AP 110b.

In an implementation, the method 1100 further comprises the steps of determining the first feedback information based on the first channel matrix $\mathbf{H}_{1,1}$ in response to receiving the one or more first pilot signals and determining second feedback information based on the interference rejection combiner matrix $\mathbf{W}_1$ and the second channel matrix $\mathbf{H}_{1,2}$ in response to receiving the one or more first pilot signals and the one or more second pilot signals.

In an implementation, the first feedback information is sent by the multi-antenna non-AP station 120a, in response to receiving a first null data packet, NDP, including the one or more first pilot signals, and a first beamforming report poll, BFRP, from the first BSS multi-antenna AP 110a, and the second feedback information is sent, in response to receiving a second BFRP from the second OBSS multi-antenna AP 110b and by making use of a second NDP, including the one or more second pilot signals, provided at an earlier stage by the second OBSS multi-antenna AP 110b to a further multi-antenna non-AP station, such as the further multi-antenna non-AP station 120b shown in figure 6.

In an implementation, the one or more first pilot signals and the one or more second pilot signals are received by the multi-antenna non-AP station 120a substantially simultaneously from the first BSS multi-antenna AP 110a and the second OBSS multi-antenna AP 110b and the first feedback information and the second feedback information are sent by the multi-antenna non-AP station 120a substantially simultaneously to the first BSS multi-antenna AP 110a and the second OBSS multi-antenna AP 110b.

The person skilled in the art will understand that the "blocks" ("units") of the various figures (method and apparatus) represent or describe functionalities of implementations of the present disclosure (rather than necessarily individual "units" in hardware or software) and thus describe equally functions or features of apparatus implementations as well as method implementations (unit = step).

In the several implementations provided in the present application, it should be understood that the disclosed system, apparatus, and method may be implemented in other manners. For example, the described implementation of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the implementations.

In addition, functional units in the implementations of the disclosure may be integrated into one processing unit, or each of the units may exist alone physically, or two or more units are integrated into one unit.

The scope of protection is defined by the appended claims.

**Claims**

1.  A multi-antenna non-AP station (120a) configured to communicate with a first multi-antenna AP (110a), wherein the multi-antenna non-AP station (120a) comprises:

    a communication interface (123a) with a plurality of antennas (124a1-3) configured to receive one or more first pilot signals from the first multi-antenna AP (110a) and one or more second pilot signals from a second multi-antenna AP (110b), wherein said first multi-antenna AP is an AP that transmits data to the multi-antenna non-AP station (120a) and the second multi-antenna AP is an AP in an overlapping basic service set that causes interference to the multi-antenna non-AP station (120a); and

    a processing circuitry (121a) configured to estimate a first channel matrix $H_{1,1}$ based on the one or more first pilot signals and a second channel matrix $H_{1,2}$ based on the one or more second pilot signals, and to determine, based on the first channel matrix $H_{1,1}$, an interference rejection combiner matrix $W_1$, wherein the matrix $W_1$ is applied by the multi-antenna non-AP station (120a) when receiving communication from the first multi-antenna AP,

    wherein the communication interface (123a) is further configured to send first feedback information based on the first channel matrix $H_{1,1}$ to the first multi-antenna AP (110a) and second feedback information based on the interference rejection combiner matrix $W_1$ and the second channel matrix $H_{1,2}$ to the second multi-antenna AP (110b);

    wherein the plurality of antennas (124a1-3) defines a maximum number of spatial communication streams from the multi-antenna non-AP station (120a) to the first multi-antenna AP (110a) and wherein the communication interface (123a) is configured to use the interference rejection combiner matrix $W_1$ to receive communication from the first multi-antenna AP (110a) using less than the maximum number of spatial communication streams;

    wherein the second feedback information is based on a basis of the product of the interference rejection combiner matrix $W_1$ and the second channel matrix $H_{1,2}$.

2.  The multi-antenna non-AP station (120a) of claim 1, wherein:

    the processing circuitry (121a) is configured to generate the basis of $B = W_1 \cdot H_{1,2}$ based on a QR decomposition of $B^*$ in the form $Q \cdot R$;

    or wherein the processing circuitry (121a) is configured to generate the basis of $B = W_1 \cdot H_{1,2}$ based on a Gram-Schmidt factorization;

    or wherein the processing circuitry (121a) is configured to generate the basis of $B = W_1 \cdot H_{1,2}$ based on a Cholesky factorization or a singular value decomposition.

3.  The multi-antenna non-AP station (120a) claim 2, wherein the processing circuitry (121a) is configured to generate the second feedback information based on one or more orthonormal vectors of a basis of the row space of $B = W_1 \cdot H_{1,2}$.

4.  The multi-antenna non-AP station (120a) of any one of the preceding claims, wherein the processing circuitry (121a) is further configured to determine a signal strength of the one or more second pilot signals from the second multi-antenna AP (110b) and wherein the communication interface (123a) is further configured to send the second feedback information to the second multi-antenna AP (110b) only if the signal strength of the one or more second pilot signals is larger than a threshold value.

5. The multi-antenna non-AP station (120a) of any one of the preceding claims, wherein the communication interface (123a) is configured to receive a null data packet announcement, NDPA, frame and a null data packet, NDP, frame from the first multi-antenna AP (110a) and/or the second multi-antenna AP (110b), wherein the NDP frame comprises the one or more first pilot signals and/or the one or more second pilot signals.

6. The multi-antenna non-AP station (120a) of any one of the preceding claims, wherein the communication interface (123a) is further configured to, in response to receiving a beamforming report poll, BFRP, from the first multi-antenna AP (110a) and/or the second multi-antenna AP (110b), to send the first feedback information to the first multi-antenna AP (110a) and/or the second feedback information to the second multi-antenna AP (110b).

7. The multi-antenna non-AP station (120a) of any one of the preceding claims, wherein the processing circuitry (121a) is configured to determine the first feedback information based on the first channel matrix $H_{1,1}$ in response to receiving the one or more first pilot signals and to determine the second feedback information based on the interference rejection combiner matrix $W_1$ and the second channel matrix $H_{1,2}$ in response to receiving the one or more first pilot signals and the one or more second pilot signals.

8. The multi-antenna non-AP station (120a) of any one of the preceding claims, wherein the communication interface (123a) is configured to send the first feedback information to the first multi-antenna AP (110a), in response to receiving a first null data packet, NDP, including the one or more first pilot signals, and a first beamforming report poll, BFRP, from the first multi-antenna AP (110a), and wherein the communication interface (123a) is configured to send the second feedback information to the second multi-antenna AP (110b), in response to receiving a second BFRP from the second multi-antenna AP (110b), wherein the second feedback information is based on the one or more first pilot signals of the first NDP and the one or more second pilot signals of a second NDP, wherein the second NDP was transmitted at an earlier stage by the second multi-antenna AP (110b) to a further multi-antenna non-AP station (120b) and also received by the multi-antenna non-AP station (120a).

9. The multi-antenna non-AP station (120a) of any one of the preceding claims, wherein the communication interface (123a) is configured to receive the one or more first pilot signals and the one or more second pilot signals substantially simultaneously from the first multi-antenna AP (110a) and the second multi-antenna AP (110b) and wherein the communication interface (123a) is configured to send the first feedback information and the second feedback information substantially simultaneously to the first multi-antenna AP (110a) and the second multi-antenna AP (110b).

10. A method (1100) for operating a multi-antenna non-AP station (120a) configured to communicate with a first multi-antenna AP (110a), wherein the method (1100) comprises:

　　　receiving (1101) by a plurality of the antennas (124a1-3) of the multi-antenna non-AP station (120a) one or more first pilot signals from the first multi-antenna AP (110a) and one or more second pilot signals from a second multi-antenna AP (110b), wherein said first multi-antenna AP is an AP that transmits data to the multi-antenna non-AP station (120a) and the second multi-antenna AP is an AP in an overlapping basic service set that causes interference to the multi-antenna non-AP station (120a);
　　　estimating (1103) a first channel matrix $H_{1,1}$ based on the one or more first pilot signals and a second channel matrix $H_{1,2}$ based on the one or more second pilot signals;
　　　determining (1105), based on the first channel matrix $H_{1,1}$, an interference rejection combiner matrix $W_1$, wherein the matrix $W_1$ is applied by the multi-antenna non-AP station (120a) when receiving communication from the first multi-antenna AP (110a); and
　　　sending (1107) first feedback information based on the first channel matrix $H_{1,1}$ to the first multi-antenna AP (110a) and second feedback information based on the interference rejection combiner matrix $W_1$ and the second channel matrix $H_{1,2}$ to the second multi-antenna AP (110b);
　　　wherein the plurality of antennas (124a1-3) defines a maximum number of spatial communication streams from the multi-antenna non-AP station (120a) to the first multi-antenna AP (110a) and wherein the method specifically comprises using the interference rejection combiner matrix $W_1$ to receive communication from the first multi-antenna AP (110a) using less than the maximum number of spatial communication streams;
　　　wherein the second feedback information is based on a basis of the product of the interference rejection combiner matrix $W_1$ and the second channel matrix $H_{1,2}$.

**11.** The method (1100) of claim 10, further comprising:

determining the first feedback information based on the first channel matrix $H_{1,1}$ in response to receiving the one or more first pilot signals; and

determining the second feedback information based on the interference rejection combiner matrix $W_1$ and the second channel matrix $H_{1,2}$ in response to receiving the one or more first pilot signals and the one or more second pilot signals.

**12.** The method (1100) of claim 10 or 11, wherein the first feedback information is sent by the multi-antenna non-AP station (120a) in response to receiving a first null data packet, NDP, including the one or more first pilot signals, and a first beamforming report poll, BFRP, from the first multi-antenna AP (110a) and wherein the second feedback information is sent in response to receiving a second BFRP from the second multi-antenna AP (110b), wherein the second feedback information is based on the one or more first pilot signals of the first NDP and the one or more second pilot signals of a second NDP, wherein the second NDP was transmitted at an earlier stage by the second multi-antenna AP (110b) to a further multi-antenna non-AP station (120b) and also received by the multi-antenna non-AP station (120a);

**13.** The method (1100) of claim 10 or 11, wherein the one or more first pilot signals and the one or more second pilot signals are received by the multi-antenna non-AP station (120a) substantially simultaneously from the first multi-antenna AP (110a) and the second multi-antenna AP (110b) and wherein the first feedback information and the second feedback information are sent by the multi-antenna non-AP station (120a) substantially simultaneously to the first multi-antenna AP (110a) and the second multi-antenna AP (110b).

**14.** A computer program product comprising a computer-readable storage medium for storing program code which, when executed on a multi-antenna non-AP station (120a) according to any one of claims 1-9, causes the multi-antenna non-AP station (120a) to perform the method (1100) of any one of claims 10 to 13.

**Patentansprüche**

**1.** Multi-Antennen-Nicht-AP-Station (120a), die konfiguriert ist, um mit einer ersten Multi-Antennen-AP (110a) zu kommunizieren, wobei die Multi-Antennen-Nicht-AP-Station (120a) umfasst:

eine Kommunikationsschnittstelle (123a) mit einer Vielzahl von Antennen (124a1-3), die konfiguriert sind, um ein oder mehrere erste Pilotsignale von dem ersten Multi-Antennen-AP (110a) und ein oder mehrere zweite Pilotsignale von einem zweiten Multi-Antennen-AP (110b) zu empfangen, wobei der erste Multi-Antennen-AP ein AP ist, der Daten an die Multi-Antennen-Nicht-AP-Station (120a) überträgt, und der zweite Multi-Antennen-AP ein AP in einem überlappenden Basisdienstsatz ist, der eine Interferenz bei der Multi-Antennen-Nicht-AP-Station (120a) verursacht; und

eine Verarbeitungsschaltlogik (121a), die konfiguriert ist, um eine erste Kanalmatrix $H_{1,1}$ basierend auf dem einen oder den mehreren ersten Pilotsignalen und eine zweite Kanalmatrix $H_{1,2}$ basierend auf dem einen oder den mehreren zweiten Pilotsignalen zu schätzen, und um basierend auf der ersten Kanalmatrix $H_{1,1}$, eine Interferenzunterdrückungskombinationsmatrix $W_1$ zu bestimmen, wobei die Matrix $W_1$ von der Multi-Antennen-Nicht-AP-Station (120a) beim Empfang von Kommunikation von dem ersten Multi-Antennen-AP angewendet wird, wobei die Kommunikationsschnittstelle (123a) ferner konfiguriert ist, um erste Rückkopplungsinformationen basierend auf der ersten Kanalmatrix $H_{1,1}$ zu dem ersten Multi-Antennen-AP (110a) und zweite Rückkopplungsinformationen basierend auf der Interferenzunterdrückungskombinationsmatrix $W_1$ und der zweiten Kanalmatrix $H_{1,2}$ zu dem zweiten Multi-Antennen-AP (110b) zu senden;

wobei die Vielzahl von Antennen (124a1-3) eine maximale Anzahl räumlicher Kommunikationsströme von der Multi-Antennen-Nicht-AP-Station (120a) zu dem ersten Multi-Antennen-AP (110a) definiert und wobei die Kommunikationsschnittstelle (123a) konfiguriert ist, um die Interferenzunterdrückungskombinationsmatrix $W_1$ zu verwenden, um Kommunikation von dem ersten Multi-Antennen-AP (110a) unter Verwendung von weniger als der maximalen Anzahl räumlicher Kommunikationsströme zu empfangen;

wobei die zweiten Rückkopplungsinformationen auf einer Basis des Produkts aus Interferenzunterdrückungskombinationsmatrix $W_1$ und der zweiten Kanalmatrix $H_{1,2}$ basiert.

**2.** Multi-Antennen-Nicht-AP-Station (120a) nach Anspruch 1, wobei:

die Verarbeitungsschaltlogik (121a) konfiguriert ist, um die Basis für $B = W_1 - H_{1,2}$ basierend auf einer QR-

Zerlegung von $\mathbf{B^*}$ in der Form $\mathbf{Q} \cdot \mathbf{R}$ zu generieren;
oder wobei die Verarbeitungsschaltlogik (121a) konfiguriert ist, um die Basis für $\mathbf{B} = \mathbf{W}_1 - \mathbf{H}_{1,2}$ basierend auf einer Gram-Schmidt-Faktorisierung zu generieren;
oder wobei die Verarbeitungsschaltlogik (121a) konfiguriert ist, um die Basis für $\mathbf{B} = \mathbf{W}_1 - \mathbf{H}_{1,2}$ basierend auf einer Cholesky-Faktorisierung oder einer Singulärwertzerlegung zu generieren.

3.  Multi-Antennen-Nicht-AP-Station (120a) nach Anspruch 2, wobei die Verarbeitungsschaltlogik (121a) konfiguriert ist, um die zweiten Rückkopplungsinformationen basierend auf einem oder mehreren Orthonormalvektoren einer Basis des Zeilenraums von $\mathbf{B} = \mathbf{W}_1 \cdot \mathbf{H}_{1,2}$ zu generieren.

4.  Multi-Antennen-Nicht-AP-Station (120a) nach einem der vorstehenden Ansprüche, wobei die Verarbeitungsschaltlogik (121a) ferner konfiguriert ist, um eine Signalstärke des einen oder der mehreren zweiten Pilotsignale von dem zweiten Multi-Antennen-AP (110b) zu bestimmen, und wobei die Kommunikationsschnittstelle (123a) ferner konfiguriert ist, um die zweiten Rückkopplungsinformationen nur dann an den zweiten Multi-Antennen-AP (110b) zu senden, wenn die Signalstärke des einen oder der mehreren zweiten Pilotsignale größer als ein Schwellenwert ist.

5.  Multi-Antennen-Nicht-AP-Station (120a) nach einem der vorstehenden Ansprüche, wobei die Kommunikationsschnittstelle (123a) konfiguriert ist, um einen Null-Datenpaket-Ankündigungs(NDPA)-Rahmen und einen Null-Datenpaket(NDPA)-Rahmen von dem ersten Multi-Antennen-AP (110a) und/oder von dem zweiten Multi-Antennen-AP (110b) zu empfangen, wobei der NDP-Rahmen das eine oder die mehreren ersten Pilotsignale und/oder das eine oder die mehreren zweiten Pilotsignale umfasst.

6.  Multi-Antennen-Nicht-AP-Station (120a) nach einem der vorstehenden Ansprüche, wobei die Kommunikationsschnittstelle (123a) ferner konfiguriert ist, um als Reaktion auf den Empfang eines Beamforming Report Poll, BFRP, von dem ersten Multi-Antennen-AP (110a) und/oder von dem zweiten Multi-Antennen-AP (110b) die ersten Rückkopplungsinformationen an den ersten Multi-Antennen-AP (110a) und/oder die zweiten Rückkopplungsinformationen an den zweiten Multi-Antennen-AP (110b) zu senden.

7.  Multi-Antennen-Nicht-AP-Station (120a) nach einem der vorstehenden Ansprüche, wobei die Verarbeitungsschaltlogik (121a) konfiguriert ist, um die ersten Rückkopplungsinformationen basierend auf der ersten Kanalmatrix H1,1 als Reaktion auf den Empfang des einen oder der mehreren ersten Pilotsignale zu bestimmen und um die zweiten Rückkopplungsinformationen basierend auf der Interferenzunterdrückungskombinationsmatrix W1 und der zweiten Kanalmatrix H1,2 als Reaktion auf den Empfang des einen oder der mehreren ersten Pilotsignale und des einen oder der mehreren zweiten Pilotsignale zu bestimmen.

8.  Multi-Antennen-Nicht-AP-Station (120a) nach einem der vorstehenden Ansprüche, wobei die Kommunikationsschnittstelle (123a) konfiguriert ist, um die ersten Rückkopplungsinformationen als Reaktion auf den Empfang eines ersten Null-Datenpakets, NDP, einschließlich des einen oder der mehreren ersten Pilotsignale, und eines ersten Beamforming Report Polls, BFRP, von dem ersten Multi-Antennen-AP (110a) an den ersten Multi-Antennen-AP (110a) zu senden, und wobei die Kommunikationsschnittstelle (123a) konfiguriert ist, um die zweiten Rückkopplungsinformationen als Reaktion auf den Empfang eines zweiten BFRP von dem zweiten Multi-Antennen-AP (110b) an den zweiten Multi-Antennen-AP (110b) zu senden, wobei die zweiten Rückkopplungsinformationen auf dem einen oder den mehreren ersten Pilotsignalen des ersten NDP und dem einen oder den mehreren zweiten Pilotsignalen eines zweiten NDP basieren, wobei das zweite NDP zu einem früheren Zeitpunkt von dem zweiten Multi-Antennen-AP (110b) an eine weitere Multi-Antennen-Nicht-AP-Station (120b) gesendet und auch von der Multi-Antennen-Nicht-AP-Station (120a) empfangen wurde.

9.  Multi-Antennen-Nicht-AP-Station (120a) nach einem der vorstehenden Ansprüche, wobei die Kommunikationsschnittstelle (123a) konfiguriert ist, um das eine oder die mehreren ersten Pilotsignale und das eine oder die mehreren zweiten Pilotsignale im Wesentlichen gleichzeitig von dem ersten Multi-Antennen-AP (110a) und von dem zweiten Multi-Antennen-AP (110b) zu empfangen, und wobei die Kommunikationsschnittstelle (123a) konfiguriert ist, um die ersten Rückkopplungsinformationen und die zweiten Rückkopplungsinformationen im Wesentlichen gleichzeitig an den ersten Multi-Antennen-AP (110a) und den zweiten Multi-Antennen-AP (110b) zu senden.

10. Verfahren (1100) zum Betreiben einer Multi-Antennen-Nicht-AP-Station (120a), die konfiguriert ist, um mit einem ersten Multi-Antennen-AP (110a) zu kommunizieren, wobei das Verfahren (1100) umfasst:

Empfangen (1101) durch eine Vielzahl von Antennen (124a1-3) der Multi-Antennen-Nicht-AP-Station (120a) eines oder mehrerer erster Pilotsignale von dem ersten Multi-Antennen-AP (110a) und eines oder mehrerer zweiter Pilotsignale von einem zweiten Multi-Antennen-AP (110b), wobei der erste Multi-Antennen-AP ein AP ist, der Daten an die Multi-Antennen-Nicht-AP-Station (120a) überträgt, und der zweite Multi-Antennen-AP ein AP in einem überlappenden Basisdienstsatz ist, der Interferenzen bei der Multi-Antennen-Nicht-AP-Station (120a) verursacht;

Schätzen (1103) einer ersten Kanalmatrix $H_{1,1}$ basierend auf dem einen oder den mehreren ersten Pilotsignalen und einer zweiten Kanalmatrix $H_{1,2}$ basierend auf dem einen oder den mehreren zweiten Pilotsignalen;

Bestimmen (1105), basierend auf der ersten Kanalmatrix $H_{1,1}$, einer Interferenzunterdrückungskombinations-matrix $W_1$, wobei die Matrix $W_1$ von der Multi-Antennen-Nicht-AP-Station (120a) angewendet wird, wenn sie Kommunikation von dem ersten Multi-Antennen-AP (110a) empfängt; und

Senden (1107) erster Rückkopplungsinformationen basierend auf der ersten Kanalmatrix $H_{1,1}$ zu dem ersten Multi-Antennen-AP (110a) und zweiter Rückkopplungsinformationen basierend auf der Interferenzunterdrückungskombinationsmatrix $W_1$ und der zweiten Kanalmatrix $H_{1,2}$ zu dem zweiten Multi-Antennen-AP (110b); wobei die Vielzahl von Antennen (124a1-3) eine maximale Anzahl räumlicher Kommunikationsströme von der Multi-Antennen-Nicht-AP-Station (120a) zu dem ersten Multi-Antennen-AP (110a) definiert und wobei das Verfahren insbesondere die Verwendung der Interferenzunterdrückungskombinationsmatrix $W_1$ umfasst, um Kommunikation von dem ersten Multi-Antennen-AP (110a) unter Verwendung von weniger als der maximalen Anzahl räumlicher Kommunikationsströme zu empfangen; wobei die zweiten Rückkopplungsinformationen auf einer Basis des Produkts aus Interferenzunterdrückungskombinationsmatrix $W_1$ und der zweiten Kanalmatrix $H_{1,2}$ basiert.

11. Verfahren (1100) nach Anspruch 10, das ferner umfasst:

Bestimmen der ersten Rückkopplungsinformationen basierend auf der ersten Kanalmatrix $H_{1,1}$ als Reaktion auf den Empfang des einen oder der mehreren ersten Pilotsignale; und

Bestimmen der zweiten Rückkopplungsinformationen basierend auf der Interferenzunterdrückungskombinationsmatrix $W_1$ und der zweiten Kanalmatrix $H_{1,2}$ als Reaktion auf den Empfang des einen oder der mehreren ersten Pilotsignale und des einen oder der mehreren zweiten Pilotsignale.

12. Verfahren (1100) nach Anspruch 10 oder 11, wobei die ersten Rückkopplungsinformationen von der Multi-Antennen-Nicht-AP-Station (120a) als Reaktion auf den Empfang eines ersten Null-Datenpakets, NDP, einschließlich des einen oder der mehreren ersten Pilotsignale, und eines ersten Beamforming Report Polis, BFRP, von dem ersten Multi-Antennen-AP (110a) gesendet werden, und wobei die zweiten Rückkopplungsinformationen als Reaktion auf den Empfang eines zweiten BFRP von dem zweiten Multi-Antennen-AP (110b) gesendet werden, wobei die zweiten Rückkopplungsinformationen auf dem einen oder den mehreren ersten Pilotsignalen des ersten NDP und dem einen oder mehreren zweiten Pilotsignalen eines zweiten NDP basieren, wobei das zweite NDP zu einem früheren Zeitpunkt von dem zweiten Multi-Antennen-AP (110b) an eine weitere Multi-Antennen-Nicht-AP-Station (120b) gesendet und auch von der Multi-Antennen-Nicht-AP-Station (120a) empfangen wurde;

13. Verfahren (1100) nach Anspruch 10 oder 11, wobei das eine oder die mehreren ersten Pilotsignale und das eine oder die mehreren zweiten Pilotsignale von der Multi-Antennen-Nicht-AP-Station (120a) im Wesentlichen gleichzeitig von dem ersten Multi-Antennen-AP (110a) und dem zweiten Multi-Antennen-AP (110b) empfangen werden und wobei die ersten Rückkopplungsinformationen und die zweiten Rückkopplungsinformationen von der Multi-Antennen-Nicht-AP-Station (120a) im Wesentlichen gleichzeitig an den ersten Multi-Antennen-AP (110a) und den zweiten Multi-Antennen-AP (110b) gesendet werden.

14. Computerprogrammprodukt, das ein computerlesbares Speichermedium zum Speichern von Programmcode umfasst, der, wenn er auf einer Multi-Antennen-Nicht-AP-Station (120a) nach einem der Ansprüche 1 bis 9 ausgeführt wird, die Multi-Antennen-Nicht-AP-Station (120a) veranlasst, das Verfahren (1100) nach einem der Ansprüche 10 bis 13 durchzuführen.

**Revendications**

1. Station non-AP à plusieurs antennes (120a) configurée pour communiquer avec un premier AP à plusieurs antennes (110a), dans laquelle la station non-AP à plusieurs antennes (120a) comprend :

une interface de communication (123a) avec une pluralité d'antennes (124a1-3) configurée pour recevoir un ou plusieurs premiers signaux pilotes provenant du premier AP à plusieurs antennes (110a) et un ou plusieurs seconds signaux pilotes provenant d'un second AP à plusieurs antennes (110b), dans laquelle ledit premier AP à plusieurs antennes est un AP qui transmet des données à la station non-AP à plusieurs antennes (120a) et le second AP à plusieurs antennes est un AP dans un ensemble de services de base qui se chevauchent qui cause une interférence sur la station non-AP à plusieurs antennes (120a) ; et

un ensemble de circuits de traitement (121a) configuré pour estimer une première matrice de canal $H_{1,1}$ sur la base du ou des premiers signaux pilotes et une seconde matrice de canal $H_{1,2}$ sur la base du ou des seconds signaux pilotes, et pour déterminer, sur la base de la première matrice de canal $H_{1,1}$, une matrice de combineur de rejet d'interférence $W_1$, dans laquelle la matrice $W_1$ est appliquée par la station non-AP à plusieurs antennes (120a) lors de la réception d'une communication provenant du premier AP à plusieurs antennes,

dans laquelle l'interface de communication (123a) est en outre configurée pour envoyer des premières informations de rétroaction basées sur la première matrice de canal $H_{1,1}$ au premier AP à plusieurs antennes (110a) et des secondes informations de rétroaction basées sur la matrice de combineur de rejet d'interférence $W_1$ et la seconde matrice de canal $H_{1,2}$ au second AP à plusieurs antennes (110b) ;

dans laquelle la pluralité d'antennes (124a1-3) définit un nombre maximal de flux de communication spatiaux entre la station non-AP à plusieurs antennes (120a) et le premier AP à plusieurs antennes (110a) et dans laquelle l'interface de communication (123a) est configurée pour utiliser la matrice de combineur de rejet d'interférence $W_1$ afin de recevoir la communication provenant du premier AP à plusieurs antennes (110a) en utilisant moins que le nombre maximal de flux de communication spatiaux ;

dans laquelle les secondes informations de rétroaction sont basées sur une base du produit de la matrice de combineur de rejet d'interférence $W_1$ et de la seconde matrice de canal $H_{1,2}$.

2. Station non-AP à plusieurs antennes (120a) selon la revendication 1, dans laquelle :

l'ensemble de circuits de traitement (121a) est configuré pour générer la base de $B = W_1 \cdot H_{1,2}$ sur la base d'une décomposition QR de B* sous la forme $Q \cdot R$ ;

ou dans laquelle l'ensemble de circuits de traitement (121a) est configuré pour générer la base de $B = W_1 \cdot H_{1,2}$ sur la base d'une factorisation de Gram-Schmidt ;

ou dans laquelle l'ensemble de circuits de traitement (121a) est configuré pour générer la base de $B = W_1 \cdot H_{1,2}$ sur la base d'une factorisation de Cholesky ou d'une décomposition en valeurs singulières.

3. Station non-AP à plusieurs antennes (120a) selon la revendication 2, dans laquelle l'ensemble de circuits de traitement (121a) est configuré pour générer les secondes informations de rétroaction sur la base d'un ou de plusieurs vecteurs orthonormés d'une base de l'espace entre des rangées de $B = W_1 \cdot H_{1,2}$.

4. Station non-AP à plusieurs antennes (120a) selon l'une quelconque des revendications précédentes, dans laquelle l'ensemble de circuits de traitement (121a) est en outre configuré pour déterminer une intensité de signal du ou des seconds signaux pilotes provenant du second AP à plusieurs antennes (110b) et dans laquelle l'interface de communication (123a) est en outre configurée pour envoyer les secondes informations de rétroaction au second AP à plusieurs antennes (110b) uniquement si l'intensité de signal du ou des seconds signaux pilotes est supérieure à une valeur seuil.

5. Station non-AP à plusieurs antennes (120a) selon l'une quelconque des revendications précédentes, dans laquelle l'interface de communication (123a) est configurée pour recevoir une trame d'annonce de paquet de données nul, NDPA, et une trame de paquet de données nul, NDP, provenant du premier AP à plusieurs antennes (110a) et/ou du second AP à plusieurs antennes (110b), dans laquelle la trame NDP comprend le ou les premiers signaux pilotes et/ou le ou les seconds signaux pilotes.

6. Station non-AP à plusieurs antennes (120a) selon l'une quelconque des revendications précédentes, dans laquelle l'interface de communication (123a) est en outre configurée pour, en réponse à la réception d'une interrogation de rapport de formation de faisceau, BFRP, provenant du premier AP à plusieurs antennes (110a) et/ou du second AP à plusieurs antennes (110b), envoyer les premières informations de rétroaction au premier AP à plusieurs antennes (110a) et/ou les secondes informations de rétroaction au second AP à plusieurs antennes (110b).

7. Station non-AP à plusieurs antennes (120a) selon l'une quelconque des revendications précédentes, dans laquelle l'ensemble de circuits de traitement (121a) est configuré pour déterminer les premières informations de rétroaction sur la base de la première matrice de canal $H_{1,1}$ en réponse à la réception du ou des premiers signaux pilotes et pour déterminer les secondes informations de rétroaction sur la base de la matrice de combineur de rejet d'interférence $W_1$

et de la seconde matrice de canal $\mathbf{H}_{1,2}$ en réponse à la réception du ou des premiers signaux pilotes et du ou des seconds signaux pilotes.

8. Station non-AP à plusieurs antennes (120a) selon l'une quelconque des revendications précédentes, dans laquelle l'interface de communication (123a) est configurée pour envoyer les premières informations de rétroaction au premier AP à plusieurs antennes (110a), en réponse à la réception d'un premier paquet de données nul, NDP, comportant le ou les premiers signaux pilotes, et d'une première interrogation de rapport de formation de faisceau, BFRP, provenant du premier AP à plusieurs antennes (110a), et dans laquelle l'interface de communication (123a) est configurée pour envoyer les secondes informations de rétroaction au second AP à plusieurs antennes (110b), en réponse à la réception d'un second BFRP provenant du second AP à plusieurs antennes (110b), dans laquelle les secondes informations de rétroaction sont basées sur le ou les premiers signaux pilotes du premier NDP et le ou les seconds signaux pilotes d'un second NDP, dans laquelle le second NDP a été transmis à un stade antérieur par le second AP à plusieurs antennes (110b) à une autre station non-AP à plusieurs antennes (120b) et a également été reçu par la station non-AP à plusieurs antennes (120a).

9. Station non-AP à plusieurs antennes (120a) selon l'une quelconque des revendications précédentes, dans laquelle l'interface de communication (123a) est configurée pour recevoir le ou les premiers signaux pilotes et le ou les seconds signaux pilotes presque simultanément en provenance du premier AP à plusieurs antennes (110a) et du second AP à plusieurs antennes (110b) et dans laquelle l'interface de communication (123a) est configurée pour envoyer les premières informations de rétroaction et les secondes informations de rétroaction presque simultanément au premier AP à plusieurs antennes (110a) et au second AP à plusieurs antennes (110b).

10. Procédé (1100) permettant de faire fonctionner une station non-AP à plusieurs antennes (120a) configurée pour communiquer avec un premier AP à plusieurs antennes (110a), dans lequel le procédé (1100) comprend :

la réception (1101) par une pluralité d'antennes (124a1-3) de la station non-AP à plusieurs antennes (120a) d'un ou de plusieurs premiers signaux pilotes provenant du premier AP à plusieurs antennes (110a) et d'un ou de plusieurs seconds signaux pilotes provenant d'un second AP à plusieurs antennes (110b), dans lequel ledit premier AP à plusieurs antennes est un AP qui transmet des données à la station non-AP à plusieurs antennes (120a) et le second AP à plusieurs antennes est un AP dans un ensemble de services de base qui se chevauchent qui cause une interférence à la station non-AP à plusieurs antennes (120a) ;
l'estimation (1103) d'une première matrice de canal $\mathbf{H}_{1,1}$ sur la base du ou des premiers signaux pilotes et d'une seconde matrice de canal $\mathbf{H}_{1,2}$ sur la base du ou des seconds signaux pilotes ;
la détermination (1105), sur la base de la première matrice de canal $\mathbf{H}_{1,1}$, d'une matrice de combineur de rejet d'interférence $\mathbf{W}_1$, dans lequel la matrice $\mathbf{W}_1$ est appliquée par la station non-AP à plusieurs antennes (120a) lors de la réception d'une communication provenant du premier AP à plusieurs antennes (110a) ; et
l'envoi (1107) de premières informations de rétroaction basées sur la première matrice de canal $\mathbf{H}_{1,1}$ au premier AP à plusieurs antennes (110a) et de secondes informations de rétroaction basées sur la matrice de combineur de rejet d'interférence $\mathbf{W}_1$ et la seconde matrice de canal $\mathbf{H}_{1,2}$ au second AP à plusieurs antennes (110b) ;
dans lequel la pluralité d'antennes (124a1-3) définit un nombre maximal de flux de communication spatiaux entre la station non-AP à plusieurs antennes (120a) et le premier AP à plusieurs antennes (110a) et dans lequel le procédé comprend spécifiquement l'utilisation de la matrice de combineur de rejet d'interférence $\mathbf{W}_1$ pour recevoir une communication provenant du premier AP à plusieurs antennes (110a) en utilisant moins que le nombre maximal de flux de communication spatiaux ;
dans lequel les secondes informations de rétroaction sont basées sur une base du produit de la matrice de combineur de rejet d'interférence $\mathbf{W}_1$ et de la seconde matrice de canal $\mathbf{H}_{1,2}$.

11. Procédé (1100) selon la revendication 10, comprenant en outre :

la détermination des premières informations de rétroaction sur la base de la première matrice de canal $\mathbf{H}_{1,1}$ en réponse à la réception du ou des premiers signaux pilotes ; et
la détermination des secondes informations de rétroaction sur la base de la matrice de combineur de rejet d'interférence $\mathbf{W}_1$ et de la seconde matrice de canal $\mathbf{H}_{1,2}$ en réponse à la réception du ou des premiers signaux pilotes et du ou des seconds signaux pilotes.

12. Procédé (1100) selon la revendication 10 ou 11, dans lequel les premières informations de rétroaction sont envoyées par la station non-AP à plusieurs antennes (120a) en réponse à la réception d'un premier paquet de données nul, NDP, comportant le ou les premiers signaux pilotes, et d'une première interrogation de rapport de formation de faisceau, BFRP, provenant du premier AP à plusieurs antennes (110a) et dans lequel les secondes informations de rétroaction sont envoyées en réponse à la réception d'un second BFRP provenant du second AP à plusieurs antennes (110b), dans lequel les secondes informations de rétroaction sont basées sur le ou les premiers signaux pilotes du premier NDP et le ou les seconds signaux pilotes d'un second NDP, dans lequel le second NDP a été transmis à un stade antérieur par le second AP à plusieurs antennes (110b) à une autre station non-AP à plusieurs antennes (120b) et a également été reçu par la station non-AP à plusieurs antennes (120a) ;

13. Procédé (1100) selon la revendication 10 ou 11, dans lequel le ou les premiers signaux pilotes et le ou les seconds signaux pilotes sont reçus par la station non-AP à plusieurs antennes (120a) presque simultanément en provenance du premier AP à plusieurs antennes (110a) et du second AP à plusieurs antennes (110b) et dans lequel les premières informations de rétroaction et les secondes informations de rétroaction sont envoyées par la station non-AP à plusieurs antennes (120a) presque simultanément au premier AP à plusieurs antennes (110a) et au second AP à plusieurs antennes (110b).

14. Produit-programme informatique comprenant un support de stockage lisible par ordinateur permettant de stocker un code de programme qui, lorsqu'il est exécuté sur une station non-AP à plusieurs antennes (120a) selon l'une quelconque des revendications 1 à 9, amène la station non-AP à plusieurs antennes (120a) à réaliser le procédé (1100) selon l'une quelconque des revendications 10 à 13.

Fig. 1

Fig. 2

Fig. 3

Fig. 4

Fig. 5

Fig. 6

EP 4 197 108 B1

Fig. 7

Fig. 8

EP 4 197 108 B1

Fig. 9

Fig. 10

1100

| |
|---|
| Receiving by a plurality of the antennas of the multi-antenna non-AP station one or more first pilot signals from the first BSS multi-antenna AP and one or more second pilot signals from a second OBSS multi-antenna AP |

1101

↓

| |
|---|
| Estimating a first channel matrix based on the one or more first pilot signals and a second channel matrix based on the one or more second pilot signals |

1103

↓

| |
|---|
| Determining, based on the first channel matrix, an interference rejection combiner matrix for suppressing a multi-user interference caused by the first BSS multi-antenna AP |

1105

↓

| |
|---|
| Sending first feedback information based on the first channel matrix to the first BSS multi-antenna AP and second feedback information based on the interference rejection combiner matrix W and the second channel matrix to the second OBSS multi-antenna AP |

1107

Fig. 11

**EP 4 197 108 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015030094 A1

- WO 2009157705 A2